# EUROPÄISCHE PATENTSCHRIFT

(11) **EP 1 501 675 B1**
(45) Veröffentlichungstag und Bekanntmachung des Hinweises auf die Patenterteilung: **17.06.2009**
(21) Anmeldenummer: 03747105.9
(22) Anmeldetag: 22.04.2003
(51) Int. Cl.: B32B 27/40, B32B 21/08, B32B 21/14

(54) **VERBUNDELEMENT ENTHALTEND (I) WERKSTOFF AUF DER BASIS VON HOLZ, HOLZARTIGEN WERKSTOFFEN UND/ODER HOLZERSATZSTOFFEN UND (II) THERMOPLASTISCHES POLYURETHAN**
COMPOSITE ELEMENT COMPRISING (I) MATERIALS MADE FROM WOOD, WOOD-LIKE MATERIALS AND/OR WOOD REPLACEMENT MATERIALS AND (II) THERMOPLASTIC POLYURETHANE
ELEMENT COMPOSITE CONTENANT (I) UN MATERIAU A BASE DE BOIS, DE MATERIAUX LIGNEUX OU DE MATERIAUX DE SUBSTITUTION DU BOIS ET (II) UN POLYURETHANNE THERMOPLASTIQUE

(30) Priorität: 26.04.2002 DE 10218848
(43) Veröffentlichungstag der Anmeldung: 02.02.2005
(73) Patentinhaber: BASF SE, 67056 Ludwigshafen (DE)
(72) Erfinder: LEBERFINGER, Marcus, 49124 Georgsmarienhütte (DE); KAMPSEN, Hans-Werner, 49401 Damme (DE); SCHOLZ, Günter, 49448 Lemförde (DE); KRECH, Rüdiger, 49356 Diepholz (DE); BRAND, Johann-Diedrich, 49448 Lemförde (DE)
(86) Internationale Anmeldenummer: PCT/EP2003/004128
(87) Internationale Veröffentlichungsnummer: WO 2003/091021

(56) Entgegenhaltungen:
- WO-A-98/21026
- DE-A- 19 611 382
- DE-A- 19 611 413
- DE-C- 19 632 794
- DE-U- 29 801 135
- FR-A- 2 746 427
- US-A- 4 072 548
- US-A- 5 439 749
- US-A- 5 554 429

## Beschreibung

Die Erfindung bezieht sich auf Verbundelement bevorzugt im Möbelsektor, bevorzugt Möbeltüren und Möbelkorpusse, enthaltend (i) laminierte oder unlaminierte Werkstoffe auf der Basis von Holz, Holz- oder Spanplatten und/oder holzartigen Werkstoffen, bevorzugt auf der Basis von Holz- oder Spanplatten, und (ii) thermoplastisches Polyurethan. Des weiteren betrifft die Erfindung Verfahren zur Herstellung dieser Verbundelemente sowie insbesondere Möbelkorpusse oder Türen enthaltend die erfindungsgemäßen Verbundelemente. Insbesondere betrifft die Erfindung Filmscharniere, bevorzugt für den Möbelbau, beispielsweise für Möbelkorpusse, Schubladen, oder Türenrahmen, insbesondere für Möbelkorpusse auf der Basis von thermoplastischen Polyurethanen.

Verbundwerkstoffe aus Holz und Kunststoff sind allgemein bekannt und finden aufgrund der Kombination der vorteilhaften Eigenschaften bei beiden Materialien zunehmend Verwendung. Auch vernetzte Polyurethane sind beispielsweise als Klebstoffe oder Beschichtungen für Hölzer allgemein bekannt. Neben mit Kunststoffen, z.B. Kunststofffolien beschichteten Hölzern oder Spanplatten kommen vermehrt auch Verbundwerkstoffe zum Einsatz, bei denen der Kunststoff aufgrund seiner elastischen Eigenschaften als funktionelles Element vorliegt. So beschreibt die DE-A 198 49 504 die Herstellung von Möbelkorpussen, bei denen ein thermoplastischer Kunststoff, der im Spritzguss verarbeitet wird, als Filmscharnier fungiert. Hierbei wird von den nach dem Folienfaltverfahren zusammenfügbaren Korpusseiten ausgegangen, die aus einer Platte mit darin eingeschnittenen V-Nuten gebildet werden. Die V-Nuten erstrecken sich entlang der Faltlinien, an denen ein Filmscharnier jeweils im Scheitelbereich der V-Nuten vorgesehen wird. Auf diese Weise läßt sich insbesondere aus vier über drei Filmscharniere miteinander verbundenen Plattenteilen ein Möbelkorpus zusammenfalten. Um in der Ausbildung der Korpuskanten bessere technische Möglichkeiten und ästhetische Gestaltungsspielräume zu erzielen, wird das Filmscharnier durch ein Kunststoffmaterial gebildet, welches in an der Ausgangsplatte angebrachten Nuten eingespritzt wird und an den zusammengeschwenkten Korpusseiten haftet und verbleibt.

Ziel der vorliegenden Erfindung war es, einen geeigneten Kunststoff zur Ausbildung des Filmscharniers nach DE-A 198 49 504 zu entwickeln.

Diese Aufgabe konnte durch den Einsatz von thermoplastischem Polyurethan, im Folgenden auch TPU genannt, gelöst werden. TPU zeigt gegenüber den für die Holzindustrie üblichen Kunststoffen wie z.B. PUR-Harzen vor allem hohe Reißdehnungen, Zugfestigkeiten und Weiterreißfestigkeiten und geringe Abriebe Insbesondere hat sich aliphatisches TPU als besonders hervorragend geeignet gezeigt, da aliphatisches TPU zum einen eine hervorragende Lichtbeständigkeit mit sich bringt, die für Korpusse mit einer langen Gebrauchsdauer unabdingbar ist und zum anderen zeigt aliphatisches TPU sehr gute Fließfähigkeiten. Diese guten Fließfähigkeiten sind nötig, um die langen Fließwege zur Ausbildung der Filmscharniere im Spritzguss zu realisieren und um das Eindringen der TPU-Schmelze in die Poren des Holzes bzw. der Spanplatte zu erreichen, um somit eine gute Haftung zwischen dem Filmscharnier und dem Holz zu erzielen. Polyether-TPU und insbesondere aliphatisches Polyether-TPU sind darüber hinaus mikrobenstabil. Dies erweist sich als besonders bedeutend bei Einsatz solcher Verbundelemente, wie z B. Möbelkorpusse, in Feuchträumen wie z.B. Bad und Küche.

Bei den erfindungsgemäßen Verbundelementen befindet sich das thermoplastische Polyurethan (ii), das bevorzugt mittels Spritzguss auf und/oder in den Werkstoff (i) gebracht wird, bevorzugt in einem haftenden Kontakt mit dem Holzwerkstoff (i). Wie eingangs dargestellt bezieht sich die Erfindung auf alle möglichen Ausgestaltungen von Verbundelementen auf der Basis von (i) Holzwerkstoffen und (ii) thermoplastischen Polyurethanen und beschränkt nicht nur auf Filmscharniere. Besonders bevorzugt sind allerdings Möbel oder Möbelelemente, die die erfindungsgemäßen Verbundelemente beinhalten, da gerade bei diesen Einsatzzwecken die erfindungsgemäßen Vorteile besonders zum Tragen kommen. Bevorzugte Ausführungsformen sind beispielsweise Möbelkorpusse oder Türen, beispielsweise Möbeltüren, die das TPU beispielsweise als Furnier, d.h. z.B. Kaschierung und/oder als Filmscharnier enthalten. Besonders bevorzugt sind Filmscharniere, beispielsweise solche, die in der DE-A 198 49 504 dargestellt sind, bevorzugt für den Möbelbau, beispielsweise für Möbelkorpusse, Schubladen, oder Türenrahmen, insbesondere für Möbelkorpusse, auf der Basis von thermoplastischen Polyurethanen. Die Herstellung und die Verwendung von diesen bevorzugten Filmscharnieren ist in der DE 198 49 504 ausführlich beschrieben. Da sich der gesamte Inhalt der DE 198 49 504 mit der Herstellung und dem Einsatz dieser Filmscharniere beschäftigt, wird in der vorliegenden Schrift ausdrücklich auf den gesamten Inhalt der DE 198 49 504 Bezug genommen und deren Inhalt in die vorliegende Schrift aufgenommen. Bei den Filmscharnieren, insbesondere für Möbel, handelt es sich üblicherweise um Kunststoffmaterial, im vorliegenden Fall TPU, welches in einer Platte, bevorzugt in der Nut einer Platte als Ausgangswerkzeug entlang der zu bildenden Eckkante bevorzugt mittels Spritzguss appliziert wird. Von der späteren Innenseite des Ausgangswerkzeug kann anschließend bis an das Filmscharnier oder in das Filmscharnier ein V-förmiger, wobei der V-Winkel üblicherweise 90°C beträgt, Ausschnitt herausgetrennt, beispielsweise gefräst oder gesägt werden. Entsprechend bildet das Filmscharnier die Schwenkachse, um die die Seitenteile des Ausgangswerkzeugs zueinander gefaltet werden können.

Als Werkstoff (i) auf der Basis von Holz, holzartigen Werkstoffen, bevorzugt Holz- oder Spanplatte oder Holzersatzstoffen können allgemein bekannte Materialien eingesetzt werden, die insbesondere in der Möbelindustrie Verwendung finden. In Betracht kommen beispielsweise massive Hölzer oder Holzplatten, Pressspanplatten. Die Holzwerkstoffe basieren bevorzugt überwiegend auf Holz, es können aber auch andere Materialien, z.B. Klebstoffe, Vernetzer, Füllmaterialien in dem Werkstoff (i) vorliegen. Bevorzugt weisen die Werkstoffe (i) einen Holzanteil von größer 30 Gew.-%, besonders bevorzugt 40 Gew.-% bis 100 Gew.-% auf. Die Holzwerkstoffe (i) können unbeschichtet oder mit üblichen Materialien beschichtet sein.

Thermoplastische Polyurethane (ii), im Folgenden auch als TPU bezeichnet, und Verfahren zu deren Herstellung sind allgemein bekannt und vielfältig beschrieben. TPU sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden. Zusätzlich bieten TPU den Vorteil einer kostengünstigen Herstellung, beispielsweise nach dem Band- oder dem Reaktionsextruderverfahren, die kontinuierlich oder diskontinuierlich durchgeführt werden können, und die einfache Thermoplastverarbeitung.

Üblicherweise erfolgt die Herstellung durch die Umsetzung von (a) Diisocyanaten, im vorliegenden Fall bevorzugt aliphatischen Diisocyanaten, mit (b) gegenüber Isocyanaten reaktiven Verbindungen mit einem Molekulargewicht von 500 g/mol bis 8000 g/mol gegebenenfalls in Gegenwart von (c) Kettenverlängerungsmitteln mit einem Molekulargewicht von 60 g/mol bis 499 g/mol, (d) Katalysatoren und/oder (e) üblichen Hilfsstoffen.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 1 : 0,5 bis 1 : 8, insbesondere von 1 : 1 bis 1 : 4, wobei die Härte der TPUs mit zunehmendem Gehalt an (c) ansteigt. Die Umsetzung zur Herstellung der TPU kann bei einer Kennzahl von 0,8 bis 1,2 : 1, bevorzugt bei einer Kennzahl von 0,9 bis 1 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabruchsmitteln wie z.B. Monoalkoholen. Die Herstellung der thermoplastischen Polyurethane erfolgt üblicherweise im Oneshot- oder Prepolymerverfahren auf der Bandanlage oder auf dem Reaktionsextruder. Hierbei werden die zur Reaktion kommenden Komponenten (a), (b) und (c) und gegebenenfalls Kettenabbruchsmitteln gemeinsam oder in bestimmter Reihenfolge vereinigt und zur Reaktion gebracht. Beim Reaktionsextruderverfahren werden die Aufbaukomponenten (a) bis (c) sowie gegebenenfalls Kettenabruchsmitteln, (d) und/oder (e) einzeln oder als Gemisch in den Extruder eingeführt, z.B. bei Temperaturen von 100 bis 250°C, vorzugsweise 140 bis 220°C zur Reaktion gebracht, das erhaltene TPU wird extrudiert, abgekühlt und granuliert.

Die Verarbeitung der TPU (ii), die üblicherweise als Granulat vorliegen, mit dem Werkstoff (i) zu den erfindungsgemäßen Verbundelementen, erfolgt durch das dem Fachmann bekannte Spritzgussverfahren. Die Kavität wird hierbei durch die in das Holz- oder üblicherweise Spanplattenmaterial oder in den Holzersatzstoff eingeschnittene Nut (quadratisch oder rechteckig) zur Ausbildung des Filmscharnieres selbst gebildet. Der in der Spritzgießerei üblicherweise als Anguss bezeichnete Bereich, wird durch einen von der Holz- bzw. Spanplattenmaterialinnenseite aus beginnende Einspritzkanal gebildet. Bezüglich der genauen Beschreibung dieses Spritzgießverfahrens, sowie der anschließenden Nacharbeitung zur fertigen Ausbildung des Filmscharniers, sowie der Endmontage des Korpus, wird hier auf DE 198 49 504 (Spalte 2 bis 6; Fig. 1 bis 10) verwiesen.

Das Schussgewicht in diesem speziellen Verfahren liegt üblicherweise bei 5 bis 50 g, so dass ein Schneckendurchmesser von 12 bis 23 mm zu empfehlen ist. Die Verarbeitungstemperaturen liegen üblicherweise bei 130°C bis 230°C. Durch die gezielte Einstellung eines niedrigen Molekulargewichtes, einerseits über die Kennzahl oder/und andererseits über den Einsatz von Kettenabbruchsmitteln, können Spritzgußtemperaturen von 150°C bis 200°C vorzugsweise von 130°C bis 180°C realisiert werden.

Die bei der Herstellung der TPUs üblicherweise verwendeten Komponenten (a), (b), (c) sowie gegebenenfalls (e) und/oder (f) sollen im Folgenden beispielhaft beschrieben werden:
a) Als Isocyanate, üblicherweise Diisocyanate, können aliphatische, cycloaliphatische, araliphatische und/oder aromatische Diisocyanate eingesetzt werden. Im einzelnen seien beispielhaft die folgenden aromatische Isocyanate genannt: 2,4-Toluylen-diisocyanat, Gemische aus 2,4- und 2,6-Toluylen-diisocyanat, 4,4'-, 2,4'- und/oder 2,2'-Diphenylmethan-diisocyanat, Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanatodiphenylethan- (1,2) und 1,5-Naphthylen-diisocyanat. Bevorzugt basieren die TPU der erfindungsgemäßen Verbundelemente auf aliphatischen Isocyanaten. Als aliphatische Diisocyanate (a) werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-diisocyanat-1,5, 2-Ethyl-butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-diisocyanat, 4,4'-, 2,4'- und/oder 2,2'-Dicyclohexylmethan-diisocyanat. Bevorzugt wird Hexamethylen-1,6-diisocyanat (Hexamethylendiisocyanat, HDI) als aliphatisches Diisocyanat (a) eingesetzt.
b) Als gegenüber Isocyanaten reaktive Verbindungen (b) können allgemein bekannte Polyhydroxylverbindungen mit Molekulargewichten von 500 g/mol bis 8000 g/mol, bevorzugt 600 g/mol bis 6000 g/mol, insbesondere 800 g/mol bis 4000 g/mol, und bevorzugt einer mittleren Funktionalität von 1,8 bis 2,6, bevorzugt 1,9 bis 2,2, insbesondere 2 eingesetzt werden, beispielsweise Polyesterole, Polyetherole und/oder Polycarbonatdiole.
   Bevorzugt werden als (b) Polytetrahydrofuran mit einem Molekulargewicht von 750 bis 5000 g/mol, bevorzugt 750 bis 2500 g/mol und besonders bevorzugt 2000 g/mol eingesetzt. Geeignete Polyetherpolyole werden im allgemeinen nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 8, vorzugsweise 2 bis 6, insbesondere 2 reaktive Wasserstoffatome gebunden enthält, oder durch kationische Polymerisation mit Lewis-Säuren oder Multimetall-Cyanidverbindungen als Katalysatoren aus einem oder mehreren Alkylenoxiden mit 2 bis 4 Kohlenstoffatomen im Alkylenrest hergestellt . Geeignete Alkylenoxide sind beispielsweise Tetrahydrofuran, 1,2- bzw. 2,3-Butylenoxid, Styroloxid und vorzugsweise Ethylenoxid und 1,2-Propylenoxid oder Tetrahydrofuran. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, Alkanolamine, mehrwertige, insbesondere zweiwertige und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, und Saccharose.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan.
c) Als Kettenverlängerungsmittel (c) können allgemein bekannte Verbindungen eingesetzt werden, beispielsweise Diamine und/oder Alkandiole mit 2 bis 10 C-Atomen im Alkylenrest, insbesondere Ethylenglykol und/oder Butandiol-1,4, und/oder Hexandiol und/oder Di- und/oder Tri-oxyalkylenglykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerungsmittel Ethylenglykol, Butandiol und/oder Hexandiol eingesetzt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren können den Aufbaukomponenten (a) bis (d) auch übliche Hilfsstoffe (e) hinzugefügt werden. Genannt seien beispielsweise oberflächenaktive Substanzen, Glasfasern, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher. Genannt seien auch Additive, die speziell in dieser genannten Erfindung zu einer Haftverbesserung zwischen TPU und Holz, Spanplatte bzw. Holzersatzstoffen führen. Solche Haftverbesserer können z.B. Isocyanat enthaltende Additive sein. Genannte Hilfsstoffe bzw. Additive können dem TPU direkt bei der Synthese oder erst bei der thermoplastischen Verarbeitung in Substanz oder eingearbeitet in einem Träger, z.B. TPU, als sogenannte Masterbatches zugesetzt werden.

Neben den genannten Rohstoffen (a) bis (e) können auch Kettenabbruchsmittel mit einem Molekulargewicht von 46 bis 499 eingesetzt werden. Solche Kettenabbruchsmittel sind Verbindungen, die lediglich eine gegenüber Isocyanaten reaktive funktionelle Gruppe aufweisen, wie z.B. Monoalkohole. Durch solche Kettenabbruchsmittel kann das Fließverhalten gezielt eingestellt werden.

Nähere Angaben über die oben genannten Hilfsmittel- und Zusatzstoffe sind der Fachliteratur zu entnehmen. Alle in dieser Schrift genannten Molekulargewichte weisen die Einheit [g/mol] auf und stellen das Zahlenmittel des Molekulargewichtes dar.

Die erfindungsgemäßen Vorteile sollen anhand der folgenden Beispiele dargestellt werden.

### Beispiel 1 auf Basis HDI:

1000 Gew-Teile PTHF 2000 (Polytetrahydrofuran; Molekulargewicht 2000; OH-Zahl = 56,7) wurden bei 80°C mit 83 Gew-Teilen Butandiol, 4 Gew-Teilen n-Octanol (Kettenabbruchsmittel), je 0,5 % Tinuvin® 328, Tinuvin® 622 LD, Irganox® 1010 und 100 ppm SDO in einem Gefäß unter Rühren vereinigt. Anschließend wurden bei 80°C unter kräftigem Rühren 240 Gew-Teile Hexamethylendiisocyanat (HDI) in einem Guss zugegeben. Erreicht das Reaktionsgemisch eine Temperatur von 110°C, so wurde die Masse in eine Schale ausgegossen und die Reaktion bei 80°C für 15 h im Temperofen vervollständigt. Die ausreagierte Schwarte wurde im Anschluss granuliert.

### Beispiel 2 auf Basis MDI:

1000 Gew-Teile PTHF 1000 (Polytetrahydrofuran; Molekulargewicht 1000; OH-Zahl = 112,1) wurden bei 80°C mit 143 Gew-Teilen Butandiol, 2 Gew-Teilen n-Octanol (Kettenabbruchsmittel) und je 0,5 % Tinuvin® 328, Tinuvin® 622 LD, Irganox® 1010 und 5 ppm SDO in einem Gefäß unter Rühren vereinigt. Anschließend wurden bei 80°C unter kräftigem Rühren 650 Gew-Teile 4,4'-Diphenylmethandiisocyanat (MDI) in einem Guss zugegeben. Erreicht das Reaktionsgemisch eine Temperatur von 110°C, so wurde die Masse in eine Schale ausgegossen und die Reaktion bei 80°C für 15 h im Temperofen vervollständigt. Die ausreagierte Schwarte wurde im Anschluss granuliert.

Die thermoplastische Verarbeitung des Granulates erfolgte auf einer Spritzgussanlage der Firma Boy. Die Verarbeitungstemperaturen lagen bei 160°C. Die Schmelze wurde hierbei direkt in die Spanplatte gespritzt. Bzgl. des Verfahrens sei auf DE 19849504 verwiesen. Das so erhaltene Filmscharnier zeigt sowohl im Beispiel 1, als auch im Falle des Beispiels 2 eine hohe bis sehr hohe Haftung zur Spanplatte. Bei dem Zusammenfalten zum Korpus kommt es zu keiner Ablösung des Filmscharniers.

## Patentansprüche

1. Verbundelement enthaltend (i) Werkstoff auf der Basis von Holz, holzartigen Werkstoffen und/oder Holzersatzstoffen und (ii) thermoplastisches Polyurethan, **dadurch gekennzeichnet, dass** das thermoplastische Polyurethan (ii) basiert auf der Umsetzung von (a) Hexamethylendiisocyanat mit (b) gegenüber Isocyanaten reaktiven Verbindungen mit einem Molekulargewicht von 500 g/mol bis 8000 g/mol und (c) Kettenverlängerungsmitteln mit einem Molekulargewicht von 60 g/mol bis 499 g/mol und gegebenenfalls monofunktionelle, gegenüber Isocyanaten reaktiven Verbindungen als Kettenabruchsmittel, (d) Katalysatoren und/oder (e) üblichen Hilfsstoffen.

2. Verbundelement gemäß Anspruch 1, **dadurch gekennzeichnet, dass** (i) eine Holz- oder Spanplatte darstellt.

3. Verbundelement gemäß Anspruch 1, **dadurch gekennzeichnet, dass** es sich bei (ii) um ein Film oder ein Filmscharnier enthaltend thermoplastisches Polyurethan handelt.

4. Verbundelement gemäß Anspruch 1, **dadurch gekennzeichnet, dass** das thermoplastische Polyurethan (ii) mittels Spritzguss auf und/oder in den Werkstoff (i) gebracht wird.

5. Möbelkorpus enthaltend Verbundelement gemäß einem der Ansprüche 1 bis 4.

6. Türen enthaltend Verbundelemente gemäß einem der Ansprüche 1 bis 4.

7. Verfahren zur Herstellung von Verbundelementen gemäß einem der Ansprüche 1 bis 4, **dadurch gekennzeichnet, dass** man auf und/oder in einen Werkstoff auf Basis von Holz, holzartigen Werkstoffen und/oder Holzersatzstoffen mittels Spritzguss thermoplastisches Polyurethan (ii) appliziert.

## Claims

1. A composite element comprising (i) material based on wood, wood-like materials and/or wood substitute materials and (ii) thermoplastic polyurethane, wherein the thermoplastic polyurethane (ii) is based on the reaction of (a) hexamethylene diisocyanate with (b) compounds reactive toward isocyanates and having a molecular weight of from 500 to 8000 g/mol and (c) chain extenders having a molecular weight of from 60 to 499 g/mol and if appropriate, as chain terminators, monofunctional compounds reactive toward isocyanates, (d) catalysts and/or (e) conventional assistants.

2. The composite element according to claim 1, wherein (i) is a wood board or particle board.

3. The composite element according to claim 1, wherein (ii) is a film or a film hinge comprising thermoplastic polyurethane.

4. The composite element according to claim 1, wherein the thermoplastic polyurethane (ii) is applied onto and/or into the material (i) by means of injection molding.

5. A furniture carcass comprising the composite element according to any of claims 1 to 4.

6. A door comprising the composite element according to any of claims 1 to 4.

7. A process for the production of the composite element according to any of claims 1 to 4, wherein thermoplastic polyurethane (ii) is applied by means of injection molding onto and/or into a material based on wood, wood-like material and/or wood substitute material.

## Revendications

1. Élément composite, contenant (i) un matériau à base de bois, de matériaux ligneux et/ou de matériaux imitant le bois et (ii) de polyuréthanne thermoplastique, **caractérisé en ce que** le matériau thermoplastique (ii) est basé sur la réaction de (a) hexaméthylène-diisocyanate avec (b) des composés réactifs vis-à-vis d'isocyanates, ayant une masse moléculaire de 500 g/mole à 8 000 g/mole et (c) des extendeurs de chaîne ayant une masse moléculaire de 60 g/mole à 499 g/mole et éventuellement des composés monofonctionnels réactifs vis-à-vis d'isocyanates, en tant que rupteurs de chaîne, (d) des catalyseurs et/ou (e) des adjuvants usuels.

2. Élément composite selon la revendication 1, **caractérisé en ce que** (i) représente un panneau de bois ou de particules.

3. Élément composite selon la revendication 1, **caractérisé en ce que** (ii) consiste en un film ou un joint en film contenant un polyuréthanne thermoplastique.

4. Élément composite selon la revendication 1, **caractérisé en ce que** le polyuréthanne thermoplastique (ii) est appliqué par moulage par injection sur et/ou dans le matériau (i).

5. Corps de meuble contenant un élément composite selon l'une quelconque des revendications 1 à 4.

6. Portes contenant un élément composite selon l'une quelconque des revendications 1 à 4.

7. Procédé pour la production d'un élément composite selon l'une quelconque des revendications 1 à 4, **caractérisé en ce qu'**on applique par moulage par injection un polyuréthanne thermoplastique (ii) sur et/ou dans un matériau à base de bois, de matériaux ligneux et/ou de matériaux imitant le bois.
